# EUROPEAN PATENT SPECIFICATION

(11) **EP 4 076 910 B1**
(45) Date of publication and mention of the grant of the patent: **29.10.2025**
(21) Application number: 20833892.1
(22) Date of filing: 21.12.2020
(51) Int. Cl.: B29C 70/08, B29C 70/50, B29C 70/88

(54) **PROCESS FOR MANUFACTURING A POLYMERIC COMPOSITE COMPOSITION COMPRISING TWO ZONES WITH DIFFERENT REINFORCMENT**
VERFAHREN ZUR HERSTELLUNG EINER POLYMERVERBUNDZUSAMMENSETZUNG MIT ZWEI ZONEN UNTERSCHIEDLICHER VERSTÄRKUNG.
PROCÉDÉ DE FABRICATION D'UNE COMPOSITION POLYMÈRE COMPOSITE COMPRENANT DEUX ZONES COMPORTANT UN RENFORCEMENT DIFFÉRENT.

(30) Priority: 21.12.2019 FR 1915291
(43) Date of publication of application: 26.10.2022
(73) Proprietor: ARKEMA FRANCE, 92800 Puteaux (FR)
(72) Inventor: GERARD, Pierre, 64170 LACQ (FR); ZOLLER, Alexander, 64170 LACQ (FR); CLEDAT, Guillaume, 92705 COLOMBES (FR)
(74) Representative: Arkema Patent
(86) International application number: PCT/EP2020/087518
(87) International publication number: WO 2021/123448

(56) References cited:
- WO-A2-2014/135810
- DE-A1- 102017 115 984
- FR-A1- 2 821 787
- FR-A1- 2 834 927

## Description

### [Field of the invention]

The present invention relates to a process for manufacturing a polymeric composite composition (PCC) comprising two zones (Z1) and (Z2), at least one zone of said zones (Z1) or (Z2) is comprising a reinforcing material (RM1), while the other zone of said zones (Z1) or (Z2) is comprising no reinforcing material or a reinforcing material (RM2) that is different from reinforcing material (RM1).

### [Prior art]

Thermoset and especially thermoplastic polymers are materials that are widely used today in several fields and applications, for example in the construction, aeronautic, automobile or railway sectors, where they are part of mechanical parts.

These mechanical parts that have to withstand high stresses during their use are widely manufactured from composite materials. A composite material is a macroscopic combination of two or more immiscible materials. The composite material consists of at least one material which forms the matrix, i.e. a continuous phase that ensures the cohesion of the structure, and a reinforcing material.

The purpose of using a composite material is to obtain performance qualities that are not available from each of its constituents when they are used separately. Consequently, composite materials are widely used in several industrial sectors, for instance building, automotive, aerospace, transport, leisure, electronics, and sports notably due to their better mechanical performance (higher tensile strength, higher tensile modulus, higher fracture toughness) and their low density, in comparison with homogeneous materials.

To allow thermoforming and recycling, it is preferred to use thermoplastic polymers also in composite materials, contrary to thermoset polymers.

Thermoplastic polymers consist of linear or branched polymers, which are usually not crosslinked.

Depending in the application and use of the polymeric composite material it is often required to have a combination of different materials and varying mechanical properties, which should have or has to have additionally a very good adhesion between them.

One objective of the present invention is to propose a polymeric composite composition comprising at least two zones (Z1) and (Z2) having different mechanical properties and a good adhesion between the two zones.

A polymeric composite composition (PCC) having a window is described in WO2014/135810. The document disclosed a process for manufacturing a multilayer composite material comprising a surface layer comprising a thermoplastic polymer A, a substrate layer comprising a polymeric composite material based on a thermoplastic (meth)acrylic polymer matrix and a reinforcing fibrous material, and which allows the formation of one or more windows comprising a thermoplastic material, which may be transparent.

The document FR28217987 discloses an insulating panel made of layers of non-woven and reinforcement grids. The layers of non-woven and one layer of the reinforcement grids are in direct contact on one surface only.

The document FR2834927 discloses a foam reinforced by a reinforcement network. The reinforced foam is in direct contact on one surface only with reinforcement grids.

### [TECHNICAL PROBLEM]

The aim of the invention is thus to remedy at least one of the drawbacks of the prior art.

One objective of the present invention is to propose a process for manufacturing a polymeric composite composition (PCC) having at least two zones (Z1) and (Z2), at least one zone of said zones (Z1) or (Z2) is comprising a reinforcing material (RM1), and that the other zone of said zones (Z1) or (Z2) is comprising no reinforcing material or a reinforcing material (RM2) that is different from reinforcing material (RM1), and having a good adhesion between the two zones under force or stress and the two zones having different mechanical properties, as recited in claim 1.

### [BRIEF DESCRIPTION OF THE INVENTION]

It has been discovered that a polymeric composite composition (PCC) comprising two zones (Z1) and (Z2), at least one zone of said zones (Z1) or (Z2) is comprising a reinforcing material (RM1), wherein the other zone of said zones (Z1) or (Z2) is comprising no reinforcing material or a reinforcing material (RM2) that is different from reinforcing material (RM1), yields to a polymeric composite or polymeric composite composition that can be of complex design and at least one zone contributes to local mechanical reinforcing. Such a polymeric composite composition is not covered by the appended claims.

It has also been discovered that a process for making polymeric composite composition (PCC) as recited in claim 1 and the steps of:
i)providing a SMC comprising a reinforcing material (RM1)
ii)providing a polymeric composition (PC2) comprising no reinforcing material or a reinforcing material (RM2) that is different from reinforcing material (RM1);
iii)bringing the polymeric material provided in ii) in direct contact with the SMC
iv)polymerizing or curing the SMC
yields to a polymeric composite or a polymeric composite composition that can be of complex design and at least one zone contributes to local mechanical reinforcing.

It has been discovered as well that a polymeric composite composition (PCC) comprising two zones (Z1) and (Z2), at least one zone of said zones (Z1) or (Z2) is comprising a reinforcing material (RM1), wherein the other zone of said zones (Z1) or (Z2) is comprising no reinforcing material or a reinforcing material (RM2) that is different from reinforcing material (RM1); can be used as a polymeric composite or polymeric composite composition that allows complex design and that at least one zone contributes to local mechanical reinforcement. Such a polymeric composite composition is not covered by the appended claims.

It has also been discovered that a process for manufacturing articles in form of mechanical parts or structural elements as recited in claim 12 and comprising the polymeric composite composition (PCC), said process is comprising the steps of:
i)providing a SMC comprising a reinforcing material (RM1)
ii)providing a polymeric composition (PC2) comprising no reinforcing material or a reinforcing material (RM2) that is different from reinforcing material (RM1);
iii)bringing the polymeric material provided in ii) in direct contact with the SMC
iv)polymerizing or curing the SMC
v) using the obtained product from step iv) as an article or in an article or transforming the obtained product to an article
yields to articles in form of mechanical parts or structural elements of complex design and possessing at least one zone that contributes to local mechanical reinforcement.

### [Brief description of drawings]

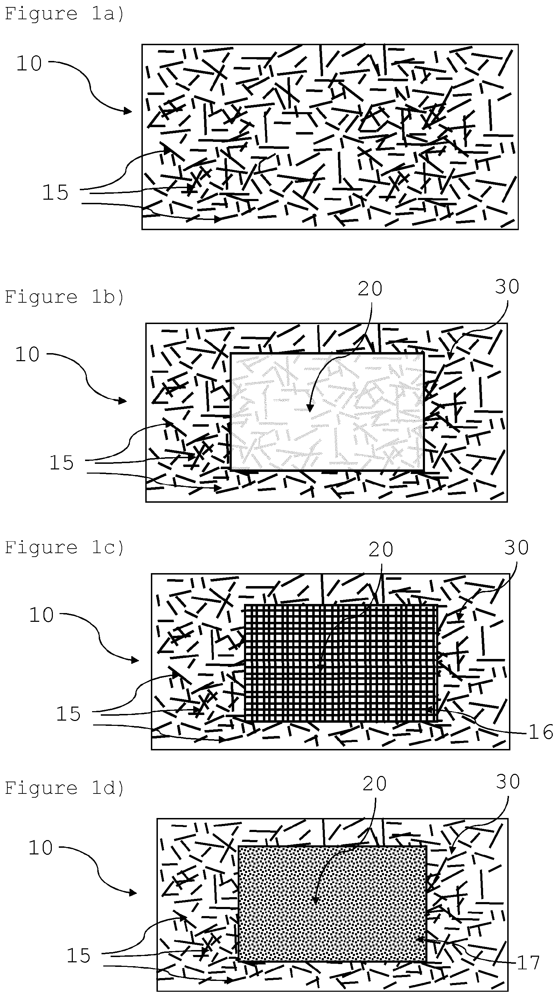

Figure 1 shows different embodiments either according to prior art or useful to understand the invention in top view. The polymeric composite composition is in form of a sheet.
Figure 1a) shows a composite sheet (10) with short fibers (15).
Figure 1b) shows an embodiment useful to understand the invention of polymeric composite composition (PCC) in form of a sheet (10) comprising two zones (Z1) (30) and (Z2) (20). Zone (Z2) (20) is comprising no reinforcing material and zone (Z1) (30) is comprising reinforcing material (RM1) in form of short fibers (15). Zone (Z2) (20) in that figure is made of a transparent material and the fibers from zone (Z1) (30) can be seen through zone (Z2) (20).
Figure 1c) shows an embodiment useful to understand the invention of polymeric composite composition (PCC) in form of a sheet (10) comprising two zones (Z1) (30) and (Z2) (20). Zone (Z2) (20) is comprising fibrous mat (16) made of long or continuous fibers as reinforcing material (RM2) and zone (Z1) (30) is comprising reinforcing material (RM1) in form of short fibers (15).
Figure 1d) shows an embodiment useful to understand the invention of polymeric composite composition (PCC) in form of a sheet (10) comprising two zones (Z1) (30) and (Z2) (20). Zone (Z2) (20) is comprising mineral filler in form of particles (17) as reinforcing material (RM2) and zone (Z1) (30) is comprising reinforcing material (RM1) in form of short fibers (15).

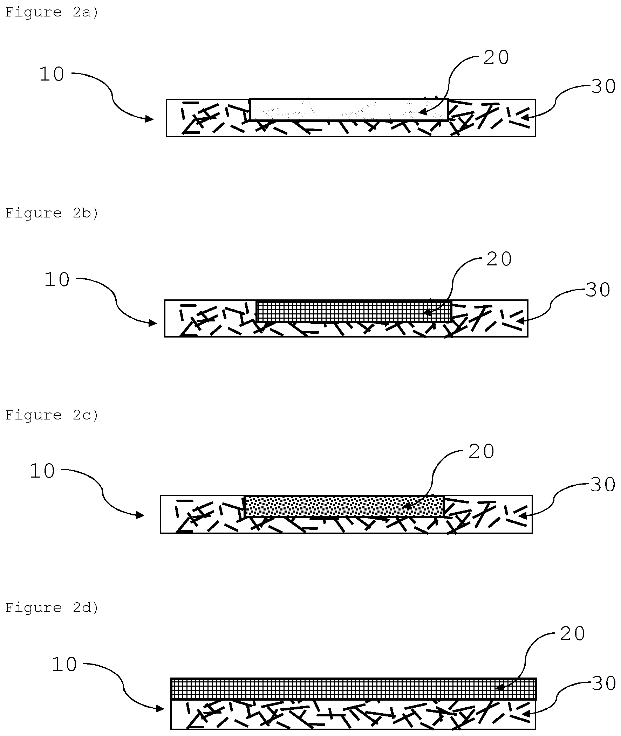

Figure 2 shows side view of different embodiments useful to understand the invention. The polymeric composite composition (PCC) is in form of a sheet (10). Figure 2a) is a side view of figure 1b) in the middle of sheet (10). Figure 2b) is a side view of figure 1c) in the middle of sheet (10). Figure 2c) is a side view of figure 1d) in the middle of sheet (10). Figure 2d) is a side view of an embodiment where the two zones (Z1) (30) and (Z2) (20) have the same dimension.

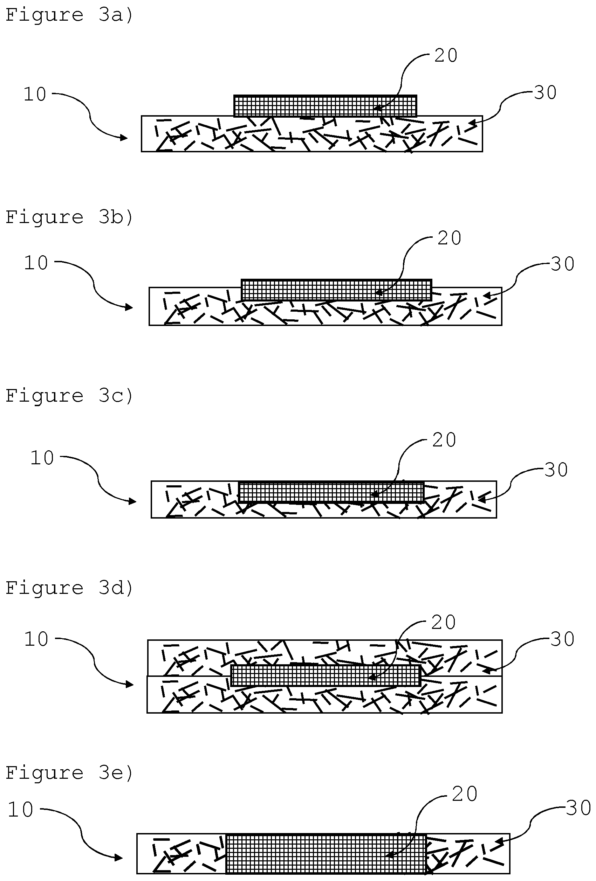

Figure 3 shows side view of different embodiments useful to understand the invention. Figure 3a) shows polymeric composite composition (PCC) is in form of a sheet (10) where zone (Z2) (20) is attached by one side to zone (Z1) (30). Figure 3b) shows polymeric composite composition (PCC) is in form of a sheet (10) where zone (Z2) (20) is partly incorporated in zone (Z1) (30). Figure 3c) shows polymeric composite composition (PCC) is in form of a sheet (10) where zone (Z2) (20) is incorporated in zone (Z1) (30) so that they form a common surface. Figure 3d) shows polymeric composite composition (PCC) is in form of a sheet (10) where zone (Z2) (20) is completely incorporated in zone (Z1) (30). Figure 3d) shows polymeric composite composition (PCC) is in form of a sheet (10) where zone (Z2) (20) is surrounded by zone (Z1) (30), so that upper and lower surface of zone (Z2) (20) id visible.

The exemplified embodiments in the figures are not of very complex design. They are just there to describe the principle of the basic different embodiments.

### [DETAILED DESCRIPTION]

According to a first aspect, not covered by the appended claims, the present disclosure relates to a polymeric composite composition (PCC) comprising two zones (Z1) and (Z2), at least one zone of said zones (Z1) or (Z2) is comprising a reinforcing material (RM1), characterized that the other zone of said zones (Z1) or (Z2) is comprising no reinforcing material or a reinforcing material (RM2) that is different from reinforcing material (RM1).

According to a second aspect, not covered by the appended claims, the present disclosure relates to a thermoplastic polymeric composite composition (PCC) comprising two zones (Z1) and (Z2), at least one zone of said zones (Z1) or (Z2) is comprising a reinforcing material (RM1), characterized that the other zone of said zones (Z1) or (Z2) is comprising no reinforcing material or a reinforcing material (RM2) that is different from reinforcing material (RM1).

According to a third aspect, the present invention relates to process for preparing a polymeric composite composition (PCC) comprising two zones (Z1) and (Z2) as recited in claim 1. that is different from reinforcing material (RM1), said process is comprising the steps of:
i)providing a SMC comprising a reinforcing material (RM1)
ii)providing a polymeric composition (PC2) comprising no reinforcing material or a reinforcing material (RM2) that is different from reinforcing material (RM1);
iii)bringing the polymeric material provided in ii) in direct contact with the SMC
iv)polymerizing or curing the SMC.

According to a fourth aspect, not covered by the appended claims, the present disclosure relates to the use of a polymeric composite composition (PCC) comprising two zones (Z1) and (Z2), at least one zone of said zones (Z1) or (Z2) is comprising a reinforcing material (RM1), characterized that the other zone of said zones (Z1) or (Z2) is comprising no reinforcing material or a reinforcing material (RM2) that is different from reinforcing material (RM1), for a polymeric composite or polymeric composite composition for complex design or where at least one zone contributes to local mechanical reinforcing.

According to a fifth aspect, not covered by the appended claims, the present disclosure relates to an article comprising a polymeric composite composition (PCC) comprising two zones (Z1) and (Z2), at least one zone of said zones (Z1) or (Z2) is comprising a reinforcing material (RM1), characterized that the other zone of said zones (Z1) or (Z2) is comprising no reinforcing material or a reinforcing material (RM2) that is different from reinforcing material (RM1).

According to a sixth aspect, the present invention relates to a process for manufacturing articles in form of mechanical parts or structural elements comprising a polymeric composite composition (PCC) comprising two zones (Z1) and (Z2),as recited in claim 12.

The term "fibrous substrate" as used refers to several fibres, uni directional rovings or continuous filament mat, fabrics, felts or nonwovens that may be in the form of strips, laps, braids, locks or pieces.

The term "(meth)acrylic" as used refers to any type of acrylic or methacrylic monomer.

The term "PMMA" as used refers to homo- and copolymers of methyl methacrylate (MMA), the weight ratio of MMA in the PMMA being at least 70 wt% for the MMA copolymer.

The term "monomer" as used refers to a molecule that can undergo polymerization.

The term "polymerization" as used refers to the process of converting a monomer or a mixture of monomers into a polymer.

The term "thermoplastic polymer" as used refers to a polymer that turns to a liquid or becomes more liquid or less viscous or soft when heated and that can take on new shapes by the application of heat and pressure. This applies also for slightly crosslinked thermoplastic polymers that can be thermoformed when heated above the softening temperature.

The term "polymer composite" as used refers to a multicomponent material comprising several different phase domains, among which at least one type of phase domain is a continuous phase and in which at least one component is a polymer.

The term "SMC" as used signifies sheet molding compound". Preferably the sheet molding compound is thermoplastic.

The term "complex design" as used refers to a part that for example can be slightly curved or strongly curved, or partly bent. Other more complex designs are imaginable by one skilled in the art.

The term "initiator" as used refers to a compound that can start/initiate the polymerization of a monomer or monomers.

By the abbreviation "phr" is meant weight parts per hundred parts of composition. For example 1phr of compound in the composition means that 1kg of that compound is added to 100kg of composition.

By the abbreviation "ppm" is meant weight parts per million parts of composition. For example 1000ppm of a compound in the composition means that 0.1kg of compound is present in 100kg of composition.

By saying that a range from x to y in the present invention, it is meant that the upper and lower limit of this range are included, equivalent to at least x and up to y.

By saying that a range is between x and y in the present invention, it is meant that the upper and lower limit of this range are excluded, equivalent to more than x and less than y.

The polymeric composite composition (PCC) comprises two zones (Z1) and (Z2), at least one zone of said zones (Z1) or (Z2) is comprising a reinforcing material (RM1), wherein the other zone of said zones (Z1) or (Z2) is comprising no reinforcing material or a reinforcing material (RM2) that is different from reinforcing material (RM1).

Preferably the two zones (Z1) and (Z2) are in direct contact. By direct contact is meant that the two zones (Z1) and (Z2) have at least a common part of a surface. It is also possible that the one zone is included partly in the other zone. It is also possible that one zone is completely included in the other zone except one surface. It is also possible that one zone is completely inside the other zone.

In a first preferred embodiment, the two zones (Z1) and (Z2) have a common part of a surface. This would be an embodiment according to figure 3a).

In a second preferred embodiment, one zone is included partly in the other zone. This would be an embodiment according to figure 3b).

In a third preferred embodiment, one zone is completely included in the other zone except one surface. This would be an embodiment according to figure 3c).

In a fourth preferred embodiment, one zone is completely inside the other zone. This would be an embodiment according to figure 3d).

The zone (Z1) (30) and the zone (Z2) (20) can have the same size of surface or a different size of surface.

In a first preferred embodiment, the zone (Z1) (30) is larger than zone (Z2) (20). By larger is meant that the whole surface of zone (Z1) (30) is larger than the surface zone (Z2) (20). As the two zones are in direct contact, the surface of zone (Z1) that is covered by zone (Z2) is counted as well. In figure 1 for example where the two zones (Z1) and (Z2) are in form of sheets, the sheet of zone (Z2) (20) is smaller than the sheet of zone (Z1) (30). More preferably the surface of the zone (Z1) (30) is at least 10% larger than surface zone (Z2) (20).

In a second preferred embodiment the zone (Z1) (30) and zone (Z2) (20) have about the same size. By about the same size is meant that the zone (Z1) (30) has a surface that is at most 10% different than surface zone (Z2) (20), larger or smaller.

In a third preferred embodiment the zone (Z1) (30) is smaller than zone (Z2) (20). By smaller is meant that the whole surface of zone (Z1) (30) is smaller than the surface zone (Z2) (20). As the two zones are in direct contact, the surface of zone (Z2) that is covered by zone (Z1) is counted as well. More preferably the surface of the zone (Z1) (30) is at least 10% smaller than surface zone (Z2) (20).

The preferred embodiments of the relative size of the zone (Z1) (30) and zone (Z2) (20) and the preferred embodiments of the contact between the two zones can be combined in any combination.

Advantageously the two zones (Z1) and (Z2) are in contact on more than one surface, in case of a sheet the upper or lower surface and part of the lateral surfaces or of all of the lateral surfaces.

One advantageous embodiment is that the zone (Z1) (30) is larger than zone (Z2) (20) and zone (Z2) (20) is completely included in the other zone except one surface or is completely inside the other zone. This would be an embodiment according to figure 3c) or 3d).

The polymeric composite composition (PCC) is a thermoplastic polymeric composite composition (PCC). This signifies that the polymeric matrix of both zones (Z1) and (Z2) is thermoplastic and comprises a thermoplastic polymer (TP1).

One zone of said zones (Z1) or (Z2) is comprising chopped fibers as reinforcing material (RM1). More preferably zone (Z1) is comprising chopped fibers as reinforcing material (RM1).

The reinforcing material (RM1), is chosen from chopped fibers. Advantageously the chopped fibers are having a length between 3mm and 100mm.

The chopped fibers have a diameter between 0.005 µm and 100 µm, preferably between 1 µm and 50 µm, more preferably between 5 µm and 30 µm and advantageously between 10 µm and 25 µm.

Preferably the reinforcing material (RM1) is chosen from natural fibers or synthetic fibers. As natural fibers one can mention plant fibres, wood fibres, animal fibres or mineral fibres.

Natural fibers are, for example, sisal, jute, hemp, flax, cotton, coconut fibres, and banana fibres. Animal fibers are, for example, wool or hair.

As synthetic material, mention may be made of polymeric fibers chosen from fibers of thermosetting polymers, of thermoplastic polymers or mixtures thereof.

The polymeric fibers may consist of polyamide (aliphatic or aromatic), polyester, polyvinyl alcohol, polyolefins, polyurethanes, polyvinyl chloride, polyethylene, unsaturated polyesters, epoxy resins and vinyl esters.

The mineral fibres may also be chosen from glass fibres, especially of E, R or S2 type, carbon fibres, boron fibres or silica fibres.

The reinforcing material (RM1) in form of chopped fibers is chosen from plant fibres, wood fibres, animal fibres, mineral fibres, synthetic polymeric fibres, glass fibres and carbon fibres, and mixtures thereof. Preferably it is chosen from mineral fibres.

The reinforcing material (RM1) in form of chopped fibers can represent between 5% and 60wt% of the zone (Z2).

**As regards the** reinforcing material (RM2), if present, it is chosen from long fibers or continuous fibers or a fibrous substrate made of long fibers or a fibrous substrate made continuous fibers as reinforcing material; or a mineral filler.

In a first preferred embodiment, the reinforcing material (RM2) is chosen from long fibers or continuous fibers. The long fibers have a length of at least 100mm, more preferably 120mm, even more preferably 150mm at least 200mm. The aspect ratio of the fibers (ration length/diameter) is at least 5000, more preferably at least 10 000 and still more preferably 15 000.

In a second preferred embodiment, the reinforcing material (RM2) is chosen from a fibrous substrate made of long fibers or a fibrous substrate made of continuous fibers. The aspect ratio of the long fibers (ration length/diameter) is at least 5000, more preferably at least 10 000 and still more preferably 15 000 For the fibrous substrate, mention may be made of several fibres, uni directional rovings or continuous filament mat, fabrics, felts or nonwovens that may be in the form of strips, laps, braids, locks or pieces. The fibrous substrate may have various forms and dimensions, either two-dimensional or three-dimensional. A fibrous substrate comprises an assembly of one or more fibres. When the fibres are continuous, their assembly forms fabrics. The two-dimensional form corresponds to nonwoven or woven fibrous mats or reinforcements or bundles of fibres, which may also be braided. Even if the two-dimensional form has a certain thickness and consequently in principle a third dimension, it is considered as two-dimensional according to the present invention. The three-dimensional form corresponds, for example, to nonwoven fibrous mats or reinforcements or stacked or folded bundles of fibres or mixtures thereof, an assembly of the two-dimensional form in the third dimension. Preferably, the fibres of the fibrous substrate of the present invention are chosen from long or continuous fibres for the two-dimensional or three-dimensional form of the fibrous substrate.

In a third preferred embodiment the reinforcing material (RM2) is chosen from a mineral filler. The mineral filler is in form of particles. The particles have a weight average particle size between 0.5µm and 1000µm.

The fibers of the reinforcing material (RM2) have a diameter between 0.005 µm and 100 µm, preferably between 1 µm and 50 µm, more preferably between 5 µm and 30 µm and advantageously between 10 µm and 25 µm.

Preferably the reinforcing material (RM2) is chosen from natural fibers or synthetic fibers. As natural fibers one can mention plant fibres, wood fibres, animal fibres or mineral fibres.

Natural fibers are, for example, sisal, jute, hemp, flax, cotton, coconut fibres, and banana fibres. Animal fibers are, for example, wool or hair.

As synthetic material, mention may be made of polymeric fibers chosen from fibers of thermosetting polymers, of thermoplastic polymers or mixtures thereof.

The polymeric fibers may consist of polyamide (aliphatic or aromatic), polyester, polyvinyl alcohol, polyolefins, polyurethanes, polyvinyl chloride, polyethylene, unsaturated polyesters, epoxy resins and vinyl esters.

The mineral fibres may also be chosen from glass fibres, especially of E, R or S2 type, carbon fibres, boron fibres or silica fibres.

The reinforcing material (RM2) in form of chopped fibers of the present invention is chosen from plant fibres, wood fibres, animal fibres, mineral fibres, synthetic polymeric fibres, glass fibres and carbon fibres, and mixtures thereof. Preferably it is chosen from mineral fibres.

The fibers of the reinforcing material (RM2) and (RM1) can have the same nature; their difference is the length of the fibers. In that case the zone, which does not comprise chopped fibers as reinforcing material (RM1), is comprising long fibers or continuous fibers or a fibrous substrate made of long fibers or continuous fibers as reinforcing material (RM2)as defined before.

The polymeric matrix of both zones (Z1) and (Z2) is thermoplastic and comprises a thermoplastic polymer (TP1).

**As regards the thermoplastic polymer (TP1)** in a first preferred embodiment it is a (meth)acrylic polymer (MP1), mention may be made of polyalkyl methacrylates or polyalkyl acrylates. According to a preferred embodiment, the (meth)acrylic polymer is polymethyl methacrylate (PMMA).

The term "PMMA" denotes a methyl methacrylate (MMA) homopolymer or copolymer or mixtures thereof.

According to one embodiment, the methyl methacrylate (MMA) homo- or copolymer comprises at least 70%, preferably at least 80%, advantageously at least 90% by weight of methyl methacrylate.

According to another embodiment, the PMMA is a mixture of at least one homopolymer and at least one copolymer of MMA, or a mixture of at least two homopolymers or two copolymers of MMA with a different average molecular weight, or a mixture of at least two copolymers of MMA with a different monomer composition.

The copolymer of methyl methacrylate (MMA) comprises from 70% to 99.9% by weight of methyl methacrylate and from 0.1% to 30% by weight of at least one monomer containing at least one ethylenic unsaturation that can copolymerize with methyl methacrylate.

These monomers are well known and mention may be made especially of acrylic and methacrylic acids and alkyl(meth)acrylates in which the alkyl group contains from 1 to 12 carbon atoms. As examples, mention may be made of methyl acrylate and ethyl, butyl or 2-ethylhexyl (meth)acrylate. Preferably, the comonomer is an alkyl acrylate in which the alkyl group contains from 1 to 4 carbon atoms.

According to a first preferred embodiment, the copolymer of methyl methacrylate (MMA) comprises from 80% to 99.9%, advantageously from 85% to 99.9% and more advantageously from 90% to 99.9% by weight of methyl methacrylate and from 0.1% to 20%, advantageously from 0.1% to 10% and more advantageously from 0.1% to 15% by weight of at least one monomer containing at least one ethylenic unsaturation that can copolymerize with methyl methacrylate. Preferably, the comonomer is chosen from acrylic acid, methacrylic acid, methyl acrylate and ethyl acrylate, and mixtures thereof.

The weight-average molecular mass of the (meth)acrylic polymer (MP1) should be high, which means greater than 50 000 g/mol and preferably greater than 100 000 g/mol.

The weight-average molecular mass can be measured by size exclusion chromatography (SEC).

**As regards the thermoplastic polymer (TP1)** in a second preferred embodiment, it is a fluor-containing polymer (F1).

In a first preferred embodiment the polymeric matrix of both zones (Z1) and (Z2) of polymeric composite composition (PCC) comprises a (meth)acrylic polymer (MP1).

In a second preferred embodiment the polymeric matrix of both zones (Z1) and (Z2) of polymeric composite composition (PCC) comprises a different thermoplastic polymer (TP1).

In a third preferred embodiment the polymeric matrix of both zones (Z1) and (Z2) of polymeric composite composition (PCC) comprises a mixture of two different thermoplastic polymers (TP1).

Different thermoplastic polymers (TP1) signifies the chemical nature of the polymer.

The process for making polymeric composite composition (PCC) as recited in claim 1 is comprising the steps of:
i)providing a SMC comprising a reinforcing material (RM1)
ii)providing a polymeric composition (PC2) comprising no reinforcing material or a reinforcing material (RM2) that is different from reinforcing material (RM1);
iii)bringing the polymeric material provided in ii) in direct contact with the SMC
iv)polymerizing or curing the SMC.

In Step i) the provided the SMC (sheet molding compound) comprises still non-fully polymerized components. This can be a monomer.

In a first preferred embodiment the monomer is a (meth)acrylic monomer (M1), chosen from acrylic acid, methacrylic acid, alkyl acrylic monomers, alkyl methacrylic monomers, hydroxyalkyl acrylic monomers and hydroxyalkyl methacrylic monomers, and mixtures thereof.

Preferably, the (meth)acrylic monomer (M1) is chosen from acrylic acid, methacrylic acid, hydroxyalkyl acrylic monomers, hydroxyalkyl methacrylic monomers, alkyl acrylic monomers, alkyl methacrylic monomers and mixtures thereof, the alkyl group containing from 1 to 22 linear, branched or cyclic carbons; the alkyl group preferably containing from 1 to 12 linear, branched or cyclic carbons.

Advantageously, the (meth)acrylic monomer (M1) is chosen from methyl methacrylate, ethyl methacrylate, methyl acrylate, ethyl acrylate, methacrylic acid, acrylic acid, n-butyl acrylate, isobutyl acrylate, n-butyl methacrylate, isobutyl methacrylate, cyclohexyl acrylate, cyclohexyl methacrylate, isobornyl acrylate, isobornyl methacrylate, hydroxyethyl acrylate and hydroxyethyl methacrylate, and mixtures thereof.

According to a preferred embodiment, at least 50% by weight and preferably at least 60% by weight of the (meth)acrylic monomer (M1) is methyl methacrylate.

According to a first more preferred embodiment, at least 50% by weight, preferably at least 60% by weight, more preferably at least 70% by weight, advantageously at least 80% by weight and even more advantageously 90% by weight of the monomer (M1) is a mixture of methyl methacrylate with optionally at least one other monomer.

In Step ii) the polymeric composition (PC2) is comprising a thermoplastic polymer (TP1).

The polymeric composition (PC2) comprising a reinforcing material (RM2) that is different from reinforcing material (RM1) can be a composite piece prepared by RTM (resin transfer molding) and variations as HP-RTM, C-RTM or I-RTM; LCM (liquid transfer molding) or pultrusion. The polymeric composition (PC2) can be in form of a sheet.

The polymeric composition (PC2) comprising no reinforcing material (RM2) can be a thermoplastic sheet, made of at least one thermoplastic polymer (TP1). In one embodiment, the sheet is transparent. In another embodiment, the sheet is colored. In still another embodiment the sheet is cloudy.

Step iii) defines partly the final form of polymeric composite composition (PCC). Depending of the size of the provided compounds and the kind of bring them into contact. By this the forms given in figures 3a to 3e can be obtained.

Step iv) can for example take place in a heated mold. Under pressure a temperature between 50°C and 200°C is chosen, preferably between 60°C and 180°C and more preferably between 70°C and 150°C. The applied pressure is for example between 25bar and 150bar.

The invention relates also to a process for manufacturing articles in form of mechanical parts or structural elements comprising a polymeric composite composition (PCC) comprising two zones (Z1) and (Z2) as recited in claim 12.

The process for manufacturing articles in form of mechanical parts or structural elements comprising the polymeric composite composition (PCC), can additionally comprise the step of post forming. The post forming includes bending as changing the form of the obtained product.

The process for manufacturing articles in form of mechanical parts or structural elements comprising the polymeric composite composition (PCC), can additionally comprise the step of welding or gluing or laminating.

As regards the use of the articles in form of mechanical parts or structural elements comprising the polymeric composite composition (PCC) or the article itself, mention may be made of automotive applications, transport applications such as buses or lorries, nautical applications, railroad applications, sport, aeronautic and aerospace applications, photovoltaic applications, computer-related applications, construction and building applications, telecommunication applications and wind energy applications.

The mechanical part is especially a motor vehicle part, boat part, bus part, train part, sport article, plane or helicopter part, space ship or rocket part, photovoltaic module part, a material for construction or building, wind turbine part, furniture part, construction or building part, telephone or cellphone part, computer or television part, or printer or photocopier part.

### [Examples]

A first sheet molding compound SMC1 is prepared from an unsaturated polyester and styrene. 70 parts by weight of Palapreg^{®} P17-02 an unsaturated polyester based on orthophatalic acid and 30 parts of styrene are mixed and added are 2.6 parts of MgO paste (Luvatol MK35), 1.5 parts of tert-butyl peroxybenzoate (Trigonox C), 2 parts of a dispersing additive (BYK W996), 2.5 parts of a mold release agent (BYK P 9065) and 60 parts by weight chopped glass fibers all together on a carrier film. The material is put between two carrier films and compacted.

A second sheet molding compound SMC2 is prepared as disclosed in WO2019/102145 based on the composition of example 2. A liquid composition is prepared by dissolving 20% by weight of PMMA with a composition of MMA/MAA 95.5/4.5 (a copolymer of MMA comprising 95.5% by weight of MMA and as comonomer 4.5% by weight of methacrylic acid) in 80% by weight of methyl methacrylate. This liquid composition is taken as 100parts by weight and it is admixed with a maturation agent MgO at 3 phr, 2 phr 2,5-Dimethyl-2,5-di(2-ethylhexanoylperoxy)hexane as radical initiator, 4 phr BYK P9912 as mold release agent and 100phr of chopped glass fibers.

A composite material CM1 in form of a sheet is prepared according to WO2014/013028 example 1 in a mold. The content of the fibrous material in the composite material is 60wt%. The dimension of the sheet is 30cm*40cm*2mm.

Example 1: The composite material CM1 sheet is placed in the middle on a sheet from the sheet molding compound SMC2 (a sheet of 40cm*50cm is taken).

Comparative example 1: The composite material CM1 sheet is placed in the middle on a sheet from the sheet molding compound SMC1 (a sheet of 40cm*50cm is taken)

Polymerization for both is is carried out for 6 minutes in a mold heated at between 110°C and 120°C at a force of 400-600 kN.

The adhesion is evaluated by simply trying to remove the two different zones from each other of the final polymeric composite composition.

**Table 1 - Evaluation of samples**

| | Example 1 | Comparative Example 1 |
|---|---|---|
| Adhesion | ++ | - |
| Delamination | impossible | easy |

The comparative example 1 show a bad adhesion (-) between the two zones CM1 and SMC1. The two zone can be easily delaminated from each other without much force. The example 1 shows a good adhesion (++) between the two zones CM1 and SMC2. The two zone cannot be delaminated from each other, even with force.

The adhesion of between the two zones of polymeric composite composition (PCC) according to the invention is very good.

## Claims

1. Process for making polymeric composite composition PCC comprising two zones Z1 and Z2 , at least one zone of said zones Z1 or Z2 is comprising a reinforcing material RM1, wherein the other zone of said zones Z1 or Z2 is comprising no reinforcing material or a reinforcing material RM2 that is different from reinforcing material RM1 wherein both zones of said zones Z1 or Z2 are comprising a thermoplastic polymer TP1 and at least one zone of said zones Z1 or Z2 is comprising a (meth)acrylic polymer MP1 or a fluor-containing polymer F1 and wherein one zone of said zones Z1 or Z2 is comprising chopped fibers as reinforcing material RM1 , said process is comprising the steps of:
i) providing a SMC comprising a reinforcing material RM1
ii) providing a polymeric composition PC2 comprising no reinforcing material or a reinforcing material RM2 that is different from reinforcing material RM1 ;
iii) bringing the polymeric material provided in ii) in direct contact with the SMC
iv) polymerizing or curing the SMC.

2. The process according to claim 1, characterized that the chopped fibers have a diameter between 0.005 µm and 100 µm.

3. The process according to claim 1 or 2, **characterized in that** the chopped fibers as reinforcing material RM1 are having a length between 3mm and 100mm.

4. The process according to any of claims 1 to 3, **characterized in that** the other zone, which does not comprise chopped fibers as reinforcing material RM1 , is comprising long fibers or continuous fibers or a fibrous substrate made of long fibers or continuous fibers as reinforcing material RM2 or fibers as reinforcing material RM2 having an aspect ratio of at least 10000 or is comprising no reinforcing material or is comprising a mineral filler as reinforcing material RM2.

5. The process according to any of claims1 to 4, characterized that the polymeric composition PC2 is in form of a sheet.

6. The process according to claim 1, **characterized in that** the thermoplastic polymer TP1 is a (meth) acrylic polymer MP1.

7. The process according to claim 6, **characterized in that** the (meth)acrylic polymer MP1 is a methyl methacrylate (MMA) homo- or copolymer comprising at least 70% by weight of methyl methacrylate.

8. The process according to any of claims 1 to 7, **characterized in that** the zone Z1 (30) is larger than zone Z2 (20).

9. The process according to any of claims 1 to 8, **characterized in that** zone Z1 (30) and zone Z2 (20) have about the same size.

10. The process according to any of claims 1 to 7, **characterized in that** the zone Z1 (30) is smaller than zone Z2 (20).

11. The process according to any of claims 1 to 7 **characterized in that** the zone Z1 (30) is larger than zone Z2 (20) and zone Z2 (20) is completely included in the other zone except one surface or is completely inside the other zone.

12. A process for manufacturing articles in form of mechanical parts or structural elements comprising the polymeric composite composition, PCC, obtainable according to the process of claim 1, said process is comprising the step of
v) using the obtained product as an or in an article or transforming the obtained product to an article.

## Patentansprüche

1. Verfahren zur Herstellung einer Polymerverbundzusammensetzung PCC, die zwei Zonen Z1 und Z2 umfasst, wobei wenigstens eine Zone der Zonen Z1 oder Z2 ein Verstärkungsmaterial RM1 umfasst, wobei die andere Zone der Zonen Z1 oder Z2 kein Verstärkungsmaterial oder ein Verstärkungsmaterial RM2, das von dem Verstärkungsmaterial RM1 verschieden ist, umfasst, wobei beide Zonen der Zonen Z1 oder Z2 ein thermoplastisches Polymer TP1 umfassen und wenigstens eine Zone der Zonen Z1 oder Z2 ein (Meth)acrylpolymer MP1 oder ein fluorhaltiges Polymer F1 umfasst und wobei eine Zone der Zonen Z1 oder Z2 geschnittene Fasern als Verstärkungsmaterial RM1 umfasst, wobei das Verfahren die Schritte umfasst:
i) Bereitstellen einer SMC, die ein Verstärkungsmaterial RM1 umfasst
ii) Bereitstellen einer Polymerzusammensetzung PC2, die kein Verstärkungsmaterial oder ein Verstärkungsmaterial RM2, das von dem Verstärkungsmaterial RM1 verschieden ist, umfasst;
iii) Bringen des bei ii) bereitgestellten Polymermaterials in direkten Kontakt mit der SMC
iv) Polymerisieren oder Härten der SMC.

2. Verfahren nach Anspruch 1, **dadurch gekennzeichnet, dass** die geschnittenen Fasern einen Durchmesser zwischen 0,005 µm und 100 µm aufweisen.

3. Verfahren nach Anspruch 1 oder 2, **dadurch gekennzeichnet, dass** die geschnittenen Fasern als Verstärkungsmaterial RM1 eine Länge zwischen 3 mm und 100 mm aufweisen.

4. Verfahren nach einem der Ansprüche 1 bis 3, **dadurch gekennzeichnet, dass** die andere Zone, die keine geschnittenen Fasern als Verstärkungsmaterial RM1 umfasst, lange Fasern oder Endlosfasern oder ein Fasersubstrat aus langen Fasern oder Endlosfasern als Verstärkungsmaterial RM2 oder Fasern als Verstärkungsmaterial RM2 mit einem Aspektverhältnis von wenigstens 10.000 umfasst oder kein Verstärkungsmaterial umfasst oder einen mineralischen Füllstoff als Verstärkungsmaterial RM2 umfasst.

5. Verfahren nach einem der Ansprüche 1 bis 4, **dadurch gekennzeichnet, dass** die Polymerzusammensetzung PC2 in der Form einer Bahn vorliegt.

6. Verfahren nach Anspruch 1,
**dadurch gekennzeichnet, dass** das thermoplastische Polymer TP1 ein (Meth)acrylpolymer MP1 ist.

7. Verfahren nach Anspruch 6,
**dadurch gekennzeichnet, dass** das (Meth)acrylpolymer MP1 ein Methylmethacrylat(MMA)-Homo- oder -Copolymer ist, das wenigstens 70 Gew.-% Methylmethacrylat umfasst.

8. Verfahren nach einem der Ansprüche 1 bis 7, **dadurch gekennzeichnet, dass** die Zone Z1 (30) größer als Zone Z2 (20) ist.

9. Verfahren nach einem der Ansprüche 1 bis 8, **dadurch gekennzeichnet, dass** Zone Z1 (30) und Zone Z2 (20) etwa gleich groß sind.

10. Verfahren nach einem der Ansprüche 1 bis 7,
**dadurch gekennzeichnet, dass** die Zone Z1 (30) kleiner als Zone Z2 (20) ist.

11. Verfahren nach einem der Ansprüche 1 bis 7, **Dadurch gekennzeichnet, dass** die Zone Z1 (30) größer als Zone Z2 (20) ist und Zone Z2 (20) mit der Ausnahme einer Oberfläche vollständig in der anderen Zone eingeschlossen ist oder vollständig innerhalb der anderen Zone liegt.

12. Verfahren zur Herstellung von Gegenständen in der Form von mechanischen Teilen oder Strukturelementen, die die Polymerverbundzusammensetzung PCC umfassen, die nach dem Verfahren nach Anspruch 1 erhältlich ist, wobei das Verfahren den Schritt umfasst
v) Verwenden des erhaltenen Produkts als oder in einem Gegenstand oder Umwandeln des erhaltenen Produkts in einen Gegenstand.

## Revendications

1. Procédé de formation de composition composite polymère PCC comprenant deux zones Z1 et Z2, au moins une zone desdites zones Z1 ou Z2 comprenant un matériau de renforcement RM1, dans lequel l'autre zone desdites zones Z1 ou Z2 ne comprend pas de matériau de renforcement ou comprend un matériau de renforcement RM2 qui est différent du matériau de renforcement RM1, dans lequel les deux zones desdites zones Z1 ou Z2 comprennent un polymère thermoplastique TP1 et au moins une zone desdites zones Z1 ou Z2 comprend un polymère (méth)acrylique MP1 ou un polymère contenant du fluor F1 et dans lequel une zone desdites zones Z1 ou Z2 comprend des fibres coupées en tant que matériau de renforcement RM1, ledit procédé comprenant les étapes de :
i) mise à disposition d'un SMC comprenant un matériau de renforcement RM1
ii) mise à disposition d'une composition polymère PC2 ne comprenant pas de matériau de renforcement ou comprenant un matériau de renforcement RM2 qui est différent du matériau de renforcement RM1 ;
iii) mise en contact direct du matériau polymère mis à disposition en ii) avec le SMC
iv) polymérisation ou durcissement du SMC.

2. Procédé selon la revendication 1, **caractérisé en ce que** les fibres coupées ont un diamètre compris entre 0,005 µm et 100 µm.

3. Procédé selon la revendication 1 ou 2, **caractérisé en ce que** les fibres coupées en tant que matériau de renforcement RM1 ont une longueur comprise entre 3 mm et 100 mm.

4. Procédé selon l'une quelconque des revendications 1 à 3, **caractérisé en ce que** l'autre zone, qui ne comprend pas de fibres coupées en tant que matériau de renforcement RM1, comprend des fibres longues ou des fibres continues ou un substrat fibreux constitué de fibres longues ou de fibres continues en tant que matériau de renforcement RM2 ou des fibres en tant que matériau de renforcement RM2 ayant un rapport de forme d'au moins 10000 ou ne comprend pas de matériau de renforcement ou comprend une charge minérale en tant que matériau de renforcement RM2.

5. Procédé selon l'une quelconque des revendications 1 à 4, **caractérisé en ce que** la composition polymère PC2 se trouve sous forme d'une feuille.

6. Procédé selon la revendication 1,
**caractérisé en ce que** le polymère thermoplastique TP1 est un polymère (méth)acrylique MP1.

7. Procédé selon la revendication 6,
**caractérisé en ce que** le polymère (méth)acrylique MP1 est un homopolymère ou copolymère de méthacrylate de méthyle (MMA) comprenant au moins 70 % en poids de méthacrylate de méthyle.

8. Procédé selon l'une quelconque des revendications 1 à 7,
**caractérisé en ce que** la zone Z1 (30) est plus grande que la zone Z2 (20).

9. Procédé selon l'une quelconque des revendications 1 à 8,
**caractérisé en ce que** la zone Z1 (30) et la zone Z2 (20) ont environ la même taille.

10. Procédé selon l'une quelconque des revendications 1 à 7,
**caractérisé en ce que** la zone Z1 (30) est plus petite que la zone Z2 (20).

11. Procédé selon l'une quelconque des revendications 1 à 7
**caractérisé en ce que** la zone Z1 (30) est plus grande que la zone Z2 (20) et la zone Z2 (20) est complètement incluse dans l'autre zone à l'exception d'une surface ou est complètement à l'intérieur de l'autre zone.

12. Procédé de fabrication d'articles sous forme de pièces mécaniques ou d'éléments structuraux comprenant la composition composite polymère, PCC, pouvant être obtenue selon le procédé de la revendication 1, ledit procédé comprenant l'étape de
v) utilisation du produit obtenu en tant qu'article ou dans un article ou transformation du produit obtenu en un article.
